# EUROPEAN PATENT APPLICATION

(11) **EP 4 790 607 A1**
(43) Date of publication of application: **12.08.2026**
(21) Application number: 25156489.4
(22) Date of filing: 07.02.2025
(51) Int. Cl.: G06Q 10/04, G06F 18/20, G06Q 40/06, G06Q 40/08, G06Q 50/26, G16H 50/30

(54) **METHOD OF ESTIMATING A RESOURCE FLOW USING A STATE MODEL AND USE OF MONTE CARLO SIMULATION THEREFORE**

(71) Applicant: Archanan ApS, 3480 Fredensborg (DK)
(72) Inventor: Teilmann Melchior, Martin, 3480 Fredensborg (DK)
(74) Representative: Patrade A/S

(57) **Abstract**

The present invention relates to a method of estimating a resource flow associated to a group of entities. The resource flow is estimated according to a set of rules and estimated for a time period. The method comprises acts of: providing the set of rules; generating a data set for each entity and generating a time-dependent state model comprises a group of discrete transition states. The estimated resource flow is calculated by simulating for each entity multiple sub-flow of resources and multiple routes through the state model over the time period.

The simulations may preferably be Markow chain or semi-Markow chain Monte Carlo simulation and the method may be performed using one or more servers comprising a processor and computer-readable medium(s) having stored instructions thereon causing the processor to perform acts of the method.

## Description

### Field of the Invention

The present invention relates to a method of estimating a resource flow associated to a group of entities. The resource flow is estimated according to a set of rules and estimated for a time period. The method comprises acts of: providing the set of rules; generating a data set for each entity and generating a time-dependent state model comprising a group of discrete transition states. The estimated resource flow is calculated by simulating for each entity multiple sub-flow of resources and multiple routes through the state model over the time period.

The simulations may preferably be Markow chain or semi-Markow chain Monte Carlo simulation and the method may be performed using one or more servers comprising a processor and computer-readable medium(s) having stored instructions thereon causing the processor to perform acts of the method.

### Background of the Invention

Presently, the use of cloud computing and parallel computing is increasing enormously.

These developments in cloud computing and parallel computing bring new possibilities of using both new and known mathematical methods for estimating different future scenarios and generating predictive models.

However, many forward-looking models used today are based on old models and principles relating to these models. The generation of forward-looking models, reconfiguration and/or implementation of such models requires very advanced mathematical knowledge and/or software skills. Forward looking models are meant as models reflecting a gained knowledge or a set of rules reflecting an output being logically dependent on a data input.

### Object of the Invention

One objective of the present disclosure is to achieve a method of estimating a resource flow over a period of time for a group of entities according to a set of rules using a state model.

A further objective is to achieve a method with highly configurable input that can handle complex business models, pension plans, and state changes with financial and biometric dependencies. A method making use of a model that is comparatively simple to implement compared to the present used models.

A further objective is to achieve a method allowing for implementation of a complex set of rules without incorporating general model simplifications and hence resulting in inaccurate estimates.

One particular objective is to achieve a method using parallel computing to calculate statutory pension provisions, which gives small pension companies (typically so-called IORPs) access to risk management of the same professional standard as large pension companies.

A general objective is to achieve a method making it easy to generate a predictive model according to a complex set of rules and to simulate a time dependent resource flow. A model which can be updated without the need of incorporating model simplifications and hence leading to inaccurate estimates.

### Description of the Invention

One objective of the invention is achieved by a method of estimating a resource flow associated to a group of entities. The resource flow is estimated according to a set of rules and estimated for a period of time from T_0 to T_end.

The method comprises acts of:
- providing the set of rules;
- generating a data set for each entity according to the set of rules, said dataset comprising information of at least an age of the entity;
- generating, based on the provided set of rules, a time-dependent state model.

The generated state model comprises a group of N discrete transition states.

The generated state model comprises for each transition state, a subset of the discrete states being open for the entity in a current transition state to transition into at time, t.

The generated state model furthermore comprises a transition probability, u for the entity in the current transition state to transition into one of the discrete states comprised in the subset. The current transition state is included in the subset.

Each discrete transition state determines a sub-flow of resources at time t.

Each transition probability, u is defined by an algorithm and calculated based on an input of time t and data comprised in the entity's dataset. The one or more transition probabilities, u for one entity in the current transition state to transition into one of the discrete states in the subset at time, t sums to 1.

The model furthermore comprises acts of:
- generating, based on the provided set of rules, algorithm(s) for determining the sub-flow of resources for each discrete transition state at time t;
- at an initial time (T_0), arranging each entity in one of the discrete states according to the provided set of rules and the provide dataset of the entity, and
- for each entity, performing a number of simulations of the entity's time dependent route through the state model according to the transition probabilities u, and for each simulation calculating, at discrete times t_m, a sub-flow of resources of the entity according to the discrete state. The times t_m being within the time period and separated by predefined time intervals D_t.

The entities at times t_m will always be in one of the discrete state, and the estimated resource flow over the period of time is estimated for one or more entities and/or one or more discrete states as a sum of the associated sub-flows divided by the number of performed simulations.

The simulations in the model may for the skilled person be known as Monte Carlo simulations.

The simulations are based on the transition probabilities of an entity and thus the entity can only transition into one state for each time step. The number of simulations should therefore reflect the complexity of the set of rules and the number of time intervals to achieve a sufficient accurate estimate of the resource flow. By performing the simulations as the entity's routes transition through the state model over the period of time, the estimated resource flow can be calculated by a simple average of the resource flows for the number of simulations. The resource flow can be calculated for a group of entities and/or for a group of discrete states and/or time steps.

For each discrete state, multiple algorithm(s) may be used for determining the sub-flow of resources for the specific discrete state at time t.

The sub-flow may be positive, negative or zero.

The advantage of the method and using a configurable time dependent state model, dataset and algorithm for resource flows is that the model is easy to adapt to a given set of rules and the logic of such rules by simply defining the transition probability in a single time step rather than generating a model for a deterministic probability weighting of state changes with general expressions being valid for the probabilities over the entire period of time, which may lead to a need for model simplifications and inaccurate estimates.

One effect of this method may be to achieve a state model being extendable to calendar time-dependent state changes, recursive state changes or financially and/or biometrically conditional changes without the need for developing new probability models, which can be rather complex and/or without the need of incorporating model simplifications and hence inaccurate estimates.

Prior known, time dependent probability models are generally based on establishing expressions for the probability of being in a certain state at a certain time. A probability model must therefore establish expressions/models that includes values for all the paths through the model from an initial state to a later state over a given time period. This has generally been solved either by integration models or differential equation models.

Time dependent probability models based on integration models or differential equation models generally require very advanced mathematical knowledge and software skills to generate. In addition, extensions of such models, such as calendar time-dependent state changes, recursive state changes or conditional changes either require new development of probability models or cannot be done at all in some of these models. This may lead to model simplifications and hence inaccurate estimates.

In addition, the complexity of such models makes them very difficult to test.

The herein disclosed method of estimating a resource flow may be more performance-intensive and may require a higher computational power than the time dependent probability models based on integration models or differential equation models, as it is may typically require a higher number of calculations. The number of calculations depends on the time intervals and thus time steps for obtaining sufficient precision. Furthermore, the disclosed method requires simulating a large number of scenarios compared to using the prior known models.

However, with the recent development in cloud computing and parallel computing the disclosed method has become realistic to implement in recent years.

One further advantage of the method is that it provides for generating a highly configurable model that can handle complex business models, pension plans, and state changes with financial and biometric dependencies.

In one aspect, the state model comprises one or more final discrete states. The final discrete state(s) may be included in at least one of the subsets.

An entity transitioning into a final state may be excluded from the simulations performed for any subsequent times t_m, in the case where the rules do not define a time dependent sub-flow.

In one aspect, the predefined time intervals D_t may increase as a function of time. The function may be a step function, a continuous function, or a combination of a step function and a continuous function.

In one embodiment of the method, the method comprises a further act of providing a second set of rules and of regenerating, according to the second set of rules, the dataset and/or the time-dependent state model including the discrete transition states, the algorithms and/or the transition probabilities.

The act of regenerating may include updating the state model by generating new or removing previous generated discrete states and associated transitions to and from that discrete state or by updating setup of current states, including assumptions for transition probabilities.

The act of regenerating may also include updating the dataset by generating new or removing previous data inputs or by updating content/definition of current data.

The act of regenerating may also include updating the algorithms for sub-flow of resources by generating new or removing previous sub-flows or by updating algorithms for current sub-flows.

In one embodiment of the method, at least the acts of performing the simulations and calculating the sub-flows are performed using one or more servers comprising a processor and computer-readable medium(s) having stored instructions thereon causing the processor to perform the acts.

Additional acts of the method may also be performed using the one or more servers.

Alternatively, the one or more servers may comprise a processor and a non-transitory computer program product having embodied thereon a computer program for causing the processor to perform the acts.

The method is developed with the preferred aim of at least the simulations being performed by a processor and hence being computer implementable.

As previously discussed, using new cloud technology with parallelization of calculations, it is possible to develop and implement new predictive models which have previously not been considered obvious to use at all or in new technical areas.

The herein disclosed model is currently considered computational heavy as it requires a lot of computing power, however in view of the recent years development in computational power this may be looked upon in a totally new context.

The disclosed method allows for a model structure so that pension funds' product catalogues can be easily implemented without the need for customer-specific programming. At the same time, the model is of high computational quality, which improves pension funds' risk management and ensures compliance with upcoming legislation.

Using new cloud technology and/or parallel computing and the herein disclosed method using an intuitive (and mathematically equivalent) Monte Carlo simulation provides for calculating pension funds' provisions without the need for customer-specific programming at the individual pension fund and which calculations complies with both current and expected upcoming legislation (revised IORP II, DORA) and improves risk management.

In one aspect, the number of simulations of each entity may be at least 1000. The more simulations the more accurate the model is. However, the number of simulations should preferably be chosen to achieve a sufficient accuracy in view of the computational power required to perform the acts within a reasonable time. In view of the present availability of computational power a sufficient number of simulations may be around 10.000 per entity. However, this may easily increase rapidly and continuously or differ as a function of time, input data and complexity of the set of rules.

In a further embodiment of the method, at least the calculations are performed by parallel computing.

More generally, all or parts of the acts in the method may be performed by parallel computing.

In one embodiment of the method, the act of generating the data set and/or parts of the state model including the algorithms determining sub-flow of resources is executed by artificial intelligence (Al) using one or more trained data driven models and/or large language models.

The trained data driven models may be trained using:
- historical data or statistical data;
- an artificially generated estimated resource flow for a future time period according to the set of rules, and/or
- previously generated state models using the method described herein.

Hence, the state model, data model for the dataset and the algorithms for the sub-flow of resources may be automatically generated based on the provided set of rules using one or more trained data driven models, and/or artificial intelligent e.g. Al agent(s) for training the data driven models and/or providing the rules.

An act of determining the probabilities may be executed by Al using the one or more data driven models.

A model can be viewed as a mapping or function that maps input values, here the different profiles, to output values. The special type and the internal structure of the model or the algorithm are not essential for the implementation of the method according to the invention.

The trained data driven model may be a hyper model comprising one or more trained models for multiple state models, data models and/or algorithms.

The trained models may include a parameter configuration comprising initialization parameters, learning rate, and/or an error measure.

The models may be implemented as neural networks, e.g. autoencoders, wherein the parameter configuration comprises a number of layers, a number of neurons for each of the layers, and/or a number of epochs.

Artificial intelligence may be used for estimating a resource flow for a future time period, for training and/or estimating the parameter configuration of the one or more data driven models.

The present method may be implemented into the processor, wherein the server is configured to execute the steps of the present method. This allows the use and training of artificial intelligence, such as neutral networks (e.g., FNN, CNN, RNN, attention networks, DNN or SNN) using machine learning to automatically determine how to conduct the acts of the method I.e. acts of generating the state model or part of the state model. In one aspect, the act of determining the resource supply source for covering the real-time consumption of the consumer is executed by artificial intelligence (Al) using the one or more first data driven models.

The Al may beneficially use the determined resource flow to determine an optimum investment strategy

A model can be viewed as a mapping or function that maps input values, here the different profiles, to output values. The special type and the internal structure of the model or the algorithm are not essential for the implementation of the method according to the invention.

The present computer program may be implemented on the computer-readable medium of a remote server (or server network) or a local server. Alternatively, a hybrid version of the server may be used where parts of the computer program may be implemented in the remote server and parts of the computer program may be implemented on the local server. In the hybrid version, the data analysis, the data storage, the data evaluation, and the data access and interaction may be implemented on and executed by one or more remote servers or server networks. Thus, allowing the present server to be configured as a local-based data service, a remote- or cloud-based data service, or a hybrid data service thereof.

In one embodiment of the method, the set of rules are defined by a pension scheme, the estimated resource flow is a financial flow and the entities are persons.

Thus, one effect of the method is to calculate the net present value of the expected financial flow and thereby calculate the technical provision of the pension scheme in accordance with national regulations. The estimated technical provisions may be calculated for a group of persons or specific products of the pensions scheme.

The technical provisions may be used for accounting purposes and regulatory reporting and the estimated flow of resources may be used for investment strategies and risk management.

In one aspect of the method, the transition of one person into one of the final states:
- generates one or more additional persons in the group, each person having a unique dataset and/or
- influences on the unique data set of an associated person in the group.

This aspect may cover pension schemes where a person's death or a person becoming disabled entails a cash payment to a spouse, children or other beneficiary to enter or transition into a discrete state in the state model.

Then implementing a pension scheme in the method, the predefined time interval D_t may be chosen to be measured in months i.e. the interval may be chosen to be within the range of 1-36 months, the range of 1-12 months, or within the range of 1-3 months.

In Europe, pension companies are required by law to establish an Actuarial Function, whose task is to coordinate and assess the calculation and valuation of the pension provisions, so that the pension company can pay its obligations (pension payments) as they fall due. The work involves complex, typically monthly, actuarial calculations, and in the large pension companies, an advanced provisioning model is generally used, which enables better risk management and hence investment returns.

Current provisioning models in the market are based on classical actuarial techniques, e.g. numerical solution of integrals/differential equations or deterministic projection models. This means that the calculations typically must be tailored to the individual pension company's product catalogue, which requires large and expensive IT implementation.

For the smaller pension funds following the European IORP II directive (typically called IORPs), the current provisioning models are therefore not an option in view of complexity and costs for implementing these models. Smaller IORPs generally rely on freelance consultants with self-developed, simpler Excel models or `legacy' IT tools. This entails major risks due to the dependency of key persons and that the models are typically not well documented and validated. Furthermore, the tools typically limit the complexity of the calculations and as a result thereof leads to more unsecure risk management and return on investment.

This also means that the smaller pension funds will not be able to comply with the latest EU regulations DORA (requirements for IT security) and expected revised IORP II (requirements for calculation complexity and risk management).

The herein disclosed method includes a model structure where a pension funds' product catalogues can be easily implemented without the need for customer-specific programming. At the same time, the model is of high computational quality, which improves pension funds' risk management and ensures compliance with upcoming legislation (revised IORP II, DORA).

In an embodiment where the set of rules are defined by a pension scheme and the estimated resource flow is a financial flow, the final states may be defined by an algorithm wherein the calculated sub-flow is a single payment and no additional payouts.

The transformation of the entity could be that the person is deceased, or the person has terminated the agreement.

Thus, once a person transition into a final state, the person may be excluded from the simulations performed for the subsequent times t_m.

In one aspect of the method, the period of time is in the range of 10-150 years, preferably 20-140 years, preferably 50-130 years or above any expected maximum human age.

In one embodiment of the method, the dataset, one or more of the discrete transition states, one or more of the algorithms determining sub-flow of resources and/or one or more of the transition probabilities is regenerated in accordance with one or more external events.

In a further embodiment of the method, the external events include one or more of evolvement in inflation, interest, biometric assumptions, such as mortality or behavioural assumptions, such as retirement age.

External event may also include new knowledge e.g. statistical knowledge. By including external events, a more accurate estimation may be achieved.

In one embodiment of the method, the number of simulations for each entity is chosen based on a predefined threshold for deviations of the estimated resource flow when repeating the simulation with different numerical seeds.

The number of simulations for each entity may be chosen based on a predefined threshold for deviations of the estimated resource flow when repeating the simulation with different numerical seeds.

In one embodiment of the method, the transition from one discrete transition state to another discrete state in the subset is initiated by a transformation of the entity, and the transition probability u is calculated based on a statistical intensity, z of that transformation taking place at time t for the entity of the age at time t.

The transition probability u may be defined by *u* = 1 - *e^{-z}.*

It is important to distinguish between probabilities and intensities in such a model. Typically, inputs to the model are intensities that say something about how "fast" a transition between the discrete states is expected to occur within a time interval and not what the probability is. For example, in simple terms an annual intensity of 2 indicates that we expect a change of state every six months. This can be converted into a probability of a transition occurring of u = 1 - *e*⁻² = 86%.

Alternatively, definitions of the transition probability may also be used according to the specific resource flow to be estimated and according to the set of rules.

The transition probability u may be calculated based on previous discrete states of the entity.

Transition probabilities can attain any value between 0 and 1, with 0 being the case where there is 0% chance of transitioning to this state and 1 being 100% certain transition to this state.

In one embodiment of the method, the set of rules includes a prioritized order of the transition, wherein the transition with the highest priority is weighted highest in the simulations.

The priority may be based on design of the state model, behavioural design or the underlying statistics behind transition probabilities. The priority ensures, that it is not possible to jump to two states in the same time step.

One objective of the present disclosure is achieved by a server comprising a processor and computer-readable medium, whereon the computer-readable medium having stored instructions causing the processor to perform the method according to any one or more of the embodiments disclosed herein.

Alternatively formulated, one objective of the present disclosure is achieved by a server comprising a processor and a non-transitory computer program product having embodied thereon a computer program for causing the processor to perform the method according to any one or more of the embodiments disclosed herein.

The server may preferably be a cloud-based server.

In a cloud computing environment, the non-transitory computer program product may store instructions for receiving cloud service data from an existing cloud infrastructure, wherein the existing cloud infrastructure comprises a storage system and/or physical servers, and a network interface, a storage interface, a cloud control manager, and/or one or more virtual machines.

One objective of the present disclosure is achieved by use of the method according to any one or more of the embodiments disclosed herein for achieving a configurable computer implemented model for estimating a liability requirement according to a specific pension scheme and wherein the group of entities are a group of persons associated with the specific pension scheme, wherein the N discrete states are associated with the rules of the specific pension scheme, and the dataset comprises at least data about the person's age.

Other information included in the dataset may include the person's gender.

The effects and advantages of this embodiment are in line with those already discussed for the embodiments of the method wherein the set of rules relates to a pension scheme.

The use may be realized by calculating the pension obligations based on a Markov or Semi-Markov Chain Monte Carlo simulation. This may include one or more of the following tasks or comparable tasks:
- Develop data model and configuration tool where the customer sets up their state model to be used in the simulation calculations;
- Develop input register tool to feed the calculation engine with record data, biometric and economic assumptions (mortality, probability of marriage, yield curve, etc.);
- Develop computational engine such as Markov or Semi-Markov Chain Monte Carlo simulation using stochastic simulation of movements based on the customer-configured state model, including Cashflow and Movement Analysis;
- Develop execution module for parallelization and setup of runtime packages;
- Develop output module with UI for presentation of relevant key figures.

Furthermore, a user-friendly user interface may be developed and if the method includes cloud computing, compliance with any relevant directives (GDPR, DORA) must be ensured.

In a further embodiment, the use of the method is for estimating an upper or lower percentile of the liability requirement and/or the resource flow over an intermediate time period being within and being shorter than time period T_0 to T_End, wherein the percentile is calculated as the percentile with the highest or lowest resource for one or more entities and/or one or more discrete states over the intermediate time period..

When calculating percentiles in a Markov Chain Monte Carlo model, there are initially two methods to choose from:
1. Time-independent or
2. Path-wise (e.g. as routes through the state model).

Furthermore, it must be decided whether to calculate
a. VaR (Value at Risk) - VaR is the percentile of the distribution of outcomes
b. cVaR (conditional Value at Risk a.k.a. expected shortfall a.k.a. Tail-VaR) - cVaR is the average of the outcomes that exceed the percentile. For example, the average of the 5% worst cases or 5% best cases

### Time-independent VaR & cVaR

In the case of Time-independent percentiles, the percentiles are calculated for each time step *regardless* of the fact that the percentiles at two different time steps belong to different simulation paths. This implies, that it is the "bad" (e.g. 5% percentile) or good (e.g. 95% percentile)" scenario *month after month* that is considered. Both VaR and cVar is calculated using this method.

### Path-wise VaR & cVaR

In the path-wise method, the percentiles are calculated over a longer period of time. This means that the time period to use have to be decided upon. For example, it can be the entire time period (e.g. 120 years) or a subset such as 12 months or 36 months (can be user-defined in the solution). Once the time period is decided, the sum of the resource flows are calculated in the selected time period for each of the paths (routes) in the simulation and then VaR or cVaR is calculated.

Generally, for both time-independent and path-wise calculations, the percentiles are calculated based on the total payments across states. However, due to the use of Monte Carlo simulation the results can be broken down by states for informational purposes. For example, the specific path for the 5% percentile might actually has the fewest payouts in State C, but overall across the other states, the path has the 5% most payouts.

In one aspect the percentile is calculated based on linear interpolation between closest ranks method.

In one aspect the percentiles can be used to calculate uncertainty of payments or uncertainty of technical provisions.

Uncertainty of payments:
- path-wise calculation of VaR and cVaR for statewise resource flow with *user-defined* time period. This means that the user can see the uncertainty of payments in a selected time period. For example, the user can choose that they want VaR/cVaR over e.g. the first 12 months, the first 36 months and months 6-18 in output.

Uncertainty of technical provisions:
- In this calculation, the entire time period is considered (could be 120 years), and instead of outputting the resource flows, the the technical provisions for each path is calculated to find the VaR and/or cVaR for the technical provisions.

For both solutions, it will also be possible for the user to choose which VaR/cVaR figures they want to see. For example 1%,2%, 5%, 25%, 75%, 95%, 98%, 99% or anything there in between.

In principle, the percentiles can also be calculated across states, for determining the worst/best cases for each state - so just like *time-independent,* one could also calculate *state-independent.*

One objective of the present disclosure is achieved by use of Monte Carlo simulation for estimating a resource flow associated to a group of entities. The resource flow is estimated according to a set of rules and estimated for a period of time from T_0 to T_end.

The method comprises acts of:
- providing the set of rules;
- generating a data set for each entity according to the set of rules, said dataset comprising information of at least an age of the entity;
- generating, based on the provided set of rules, a time-dependent state model.

The generated state model comprises a group of N discrete transition states.

The generated state model comprises for each transition state, a subset of the discrete states being open for the entity in a current transition state to transition into at time, t.

The generated state model furthermore comprises a transition probability, u for the entity in the current transition state to transition into one of the discrete states comprised in the subset. The current transition state is included in the subset.

Each discrete transition state determines a sub-flow of resources at time t.

Each transition probability, u is defined by an algorithm and calculated based on an input of time t and data comprised in the entity's dataset. The one or more transition probabilities, u for one entity in the current transition state to transition into one of the discrete states in the subset at time, t sums to 1.

The model furthermore comprises acts of:
- generating, based on the provided set of rules, algorithm(s) for determining the sub-flow of resources for each discrete transition state at time t, and
- performing the Monte Carlo simulation with a number of simulations for each entity from the initial time (T_0) to the end time (T_end) at discrete times t_m being within the time period and separated by predefined time intervals D_t.

The estimated resource flow is estimated for one or more entities and/or one or more discrete states over the period of time as the sum of associated estimated sub-flows divided by the number of performed simulations, and

the Monte Carlo simulation is a Markow chain or semi-Markow chain Monte Carlo simulation, and which use includes a server according to one or more of the embodiments disclosed herein.

The effects and advantages of this embodiment of using Monte Carlo simulation for estimating a resource flow for a group of entities according to a set of rules are in line with those already discussed herein for the embodiments of the method.

This embodiment may furthermore comprise the additional technical features previously disclosed in the various aspects and embodiments of the method.

In the following, a brief comparison of mathematical models for calculating the value of expected cash flows are presented with pros and cons for each model.

There are basically two overall mathematical models for calculating the value of expected cash flows: 1. probability models and 2. projection models.

The models ultimately calculate the same thing - namely the value of the expected payments. But the approaches to the calculations are different and are based on different types of mathematics and numerical solutions.

The two types are described in more detail below.

### 1. Probability models

Probability models are based on establishing expressions/models for the "probability of being in a certain state at a certain time". For example, it could be "the probability of being in state C at time 200 given that the person is in state A at time 0", illustrated by *p_{AC}*(0,200).

A probability model must therefore establish expressions/models that can take values for all the paths from A to C over the first 200 months of the calculation. This is solved either by integration models or differential equation models.

*Integration models* work - roughly speaking - by summing the probabilities of jumping from one state to another in all the time steps you calculate over.

*Differential equation models* start from a known initial condition (either at time 0 or at the end time) and instead calculate the probability of being in a certain state at a certain time by calculating forward/backward the probabilities in the individual time steps.

For example, we know that everyone will be dead in 120 years, so we have 0 payouts at the last time step, or we know that customer x starts in state A, so the probability of being in state A is 1 at time 0.

In the probability models, a model is thus established for the probability of being in a certain state at a certain time and the expected payments can now be calculated by multiplying the pension obligation in the individual states by the probability of being in the state.

The advantage of probability models is that they are based on well-known mathematical methods (analytical or numerical solution of integrals and/or differential equations) and that they can typically be implemented with good performance.

Differential equation models have the additional advantage over integration models that they can better handle, for example, recursive state models.

The disadvantage of probability models is that they require very advanced mathematical knowledge and software skills. In addition, exotic extensions of the state models, such as calendar time-dependent state changes, financially dependent state changes or recursive state changes, either require new development of probability models or cannot be done at all in some of these models, which is why one must resort to simplifications. In addition, they are difficult to test and require very high actuarial and mathematical specialist knowledge.

### 2. Projection models

Projection models are based on projecting a person's movement into the state model and thus only relate to jump probabilities and do not establish general expressions for the probability of being in a specific state at a specific time.

Projection models can be made in two different ways: i) deterministic or ii) based on Monte Carlo simulation.

Deterministic projection models calculate the probability-weighted movement in the state model. For example, if a person starts in state A and has 80%, 10%, 5%, 5% probability of being in state A, B, C, D at time 1, respectively, then the person will be "split" at time 1, so that there are 0.8, 0.1, 0.05 and 0.05 of him/her in the different states at time 1.

Monte Carlo simulation is based on the same jump probabilities, but instead of "splitting the person up" in each time step, he/she can only jump to one state for each time step and x number of simulations (e.g. 10,000) are then made of how a person can move in the state model, so that you get 10,000 different paths through the life of this person. The expected pension payments can then be calculated by a simple average of the 10,000 simulations and the payments the pension company is obligated to make in the different states.

The advantage of projection models is that they are simpler to understand and communicate than probability models and it is easier to implement business logic where transition probabilities depend on, for example, economic conditions, etc. This is because you do not have to set up general expressions/models for the probabilities, but instead simply look at the jump probabilities in a single time step.

The advantage of the Monte Carlo method is also that it is even easier to explain and understand than the deterministic projection model and that it is simpler to implement, as one does not have to set up a model for the deterministic probability weighting of state changes. In particular, this makes it possible to set up a highly configurable model that can handle exotic business models, pension plans, and state changes with financial and biometric dependencies.

The disadvantage of projection models is that they are often more performance-intensive and require a lot of computing power, as it is typically necessary to calculate monthly in the projection to obtain sufficient precision. Furthermore, the Monte Carlo method requires simulation of a large number of scenarios. These models have only become realistic to implement in recent years when cloud computing has become available.

The method and uses disclosed herein may be expanded to include one or more of the followings features:
*Duration-dependent state changes:* With duration-dependent state transitions, the probabilities may change depending on how long you have been in the state.

*Financially or biometrically dependent state changes:* This extension is related to the extension to ALM (see below). With financially or biometrically dependent state changes, the probabilities can be made dependent on, for example, the investment return or the size of pension savings or biometric threshold levels that change the probabilities. This may be relevant, for example, for repurchase options, which may depend on financial metrics, or if stochastic biometrics are introduced, so that, for example, mortality depends on whether disability probabilities exceed certain threshold levels.

*Allow setup of sub-portfolios:* This extension may provide for setting up specific parts of the condition model that only apply to certain parts of e.g. a pension company or for certain discrete sates. This could be the case, for example, if the pension fund has multiple pension regulations or member groups with different products and characteristics.

*Dependence on biometric and financial inputs:* Can be used, for example, for repurchase options or options for choosing lump sum payments in the event of illness, etc.

*Inflation module:* May allow for more sophisticated inflation modelling with the possibility of 'caps' and 'floors', etc., as well as the possibility of product-dependent inflation adjustments, so that certain products follow special inflation adjustments.

*Asset Liability Management (ALM) module:* Setup of assumptions about stochastic reinvestment turns and a module for setting up business rules for investment strategy etc. for use in ALM and valuation of options and guarantees.

*Expand to formula-based stress scenarios:* This extension may allow for making stressed economic and/or biometric assumptions. For example, higher or lower interest rates, or inflation, or higher or lower biometric assumptions. The expansion may be made formula-based, so it is possible to make, for example, calendar-time-dependent shocks to the assumptions or with 'caps' and 'floors' etc.

*Extend with run-packages:* This extension may make it possible to set up fixed run packages for use, for example, in risk management or board reporting, where there is a need for understanding sensitivities to e.g. financial assumptions and biometric assumptions.

*Expand with Movement analysis:* This extension may be used for profit and loss statements to provide a detailed explanation of the development of technical provisions over a user-defined time period. This tool can provide insight into whether the economic and biometric assumptions match the actual developments in returns and population or if, for example, mortality, disability, returns, etc. are unrealistic and the assumptions therefore should be reassessed going forward.

*Expand with projection of number of entities:* With this extension, the user may get a projection of the expected number of entities in each state, thereby providing for e.g. pension companies to estimate how many active, dead, disabled, etc. members are expected over time. This may, among other things, be relevant input to calculate the amount of administrative costs the pension company should expect to make provisions for.

*Expansion to 'Defined contribution' and 'profit sharing schemes':* An expansion of the model could include that it can also be used for DC (defined contribution) pension schemes and not just DB (defined benefit). At the same time, it could also be expanded to model 'profit sharing' mechanisms, where any surplus on financial, biometric or administrative parts of the pension schemes is distributed between members/customers and owners (the pension company and/or plan sponsor) in the form of bonus payments. With this extension, it also becomes possible to value payments to/from equity and get a valuation of expected future profits.

*Extension for simulating 'second lives':* This extension concerns simulating the existence and age of any insured lives that are not known at the time of calculation. For example, spouses or children, where the pension company has an obligation in the event of the insured's death, but the spouse or children are not known before the death.

*Module for calculating administrative costs:* A pension company must also provision for the expected future administration of the pension plan. Parts of these may depend on how many members/customers the pension fund has, and other parts may be fixed costs. With a module for calculating expected administrative costs, the company can calculate the provision for this as an integrated part of the runs.

*Technical extensions:* In addition, it should be mentioned - for the record - that there are also a number of more or less technical extensions to improve performance, user experience, testing, etc.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Fig. 1 illustrates one embodiment of a state model and possible transitions between the states.
Figs. 2 and 3 illustrates one embodiment of a state model illustrated as a time dependent route diagram.
Fig. 4 illustrates one embodiment of the method of estimating a resource flow.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.
- No: Item
- 2: discrete transition states
- 10: state model
- 12: set of rules
- 20: final states
- 22: subset of discrete states
- 23: current transition state
- 28: route
- 30: dataset
- 32: second set of rules
- 50: server
- 52: computer-readable medium
- 60: data driven model
- 70: algorithm
- 100: method
- 101: providing
- 102: generating
- 104: establishing
- 106: arranging
- 108: performing
- T_0: initial time
- T_end: end time
- u: transition probability

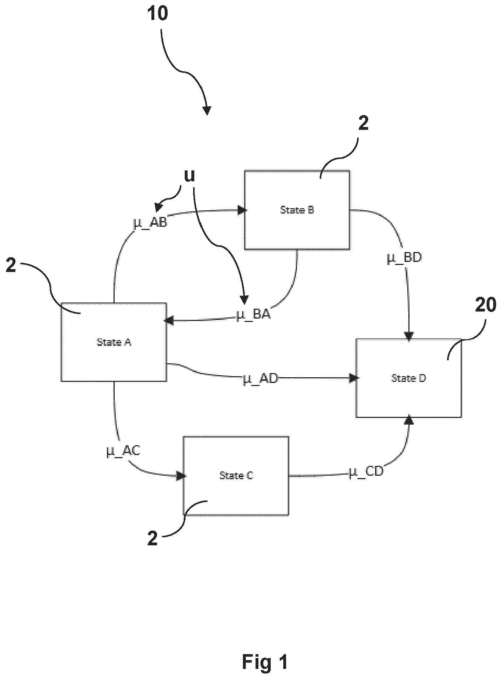

Fig. 1 illustrates one embodiment of a state model 10 with a group of discrete states 2 for the entity to enter into and how the entity can transition between states. The probability of change between the two discrete states 2 are depicted by transition probabilities *µ_{XY}.*

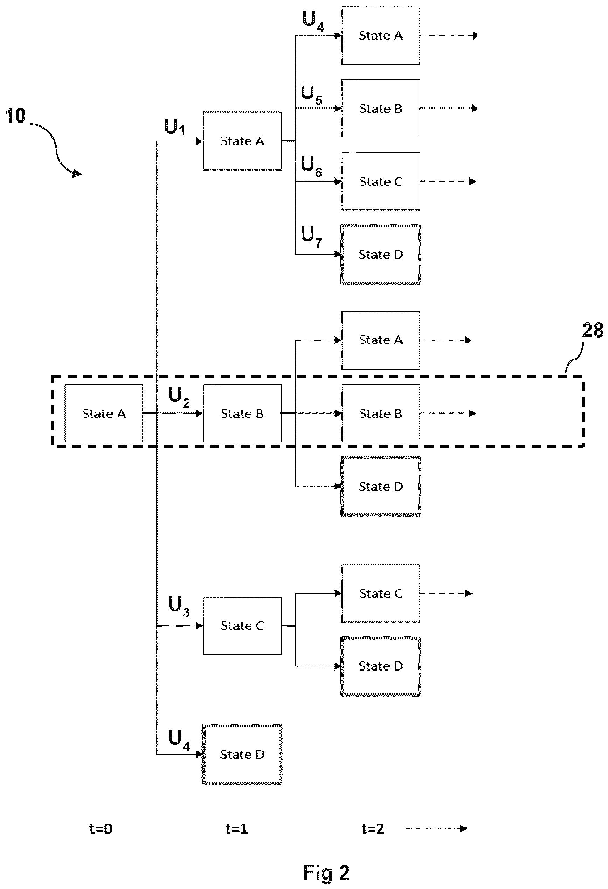

Fig. 2 illustrates a state model 10 comparable to that in figure 1 illustrated as a time dependent route diagram illustrating alle the possible routes 28 for an entity through the state model over a period of time.

The diagram illustrates the possible subset associated with a discrete transition state.

As the illustration shows, a huge number of routes 28 quickly arise. The time steps could, for example be months, so t=0 is this month, t=1 is next month, and so on.

In a case where the model is for used for estimating technical provisions for a pension scheme, the pension company must calculate the expected payments until all obligations have been met, it could require calculations for the next 100 years or more if the company has lifelong pension obligations. This would typically require advanced mathematical models to carry out the calculations. However, using the time dependent state model 10 in combination with a Monte Carlo simulation the different routes can be simulated leading to a simple method for estimating for example technical provisions.

Contrary to the illustration in figure 1 of the state model, when illustrating the state model as a time dependent state model, the entity instead of remaining in for example state A for t=1 to t=2 the entity will in the model illustrated in figure 2 'jump' from state A to state A with a given probability u. The probability may change dependent on the how long time the entity has been in the same state and/or the age of the entity at time t and thus the probability of 'jumping' from state A to state A for t=0 to t=1 is illustrated with a probability U1, and probability of 'jumping' from state A to state A for t=1 to t=2 is illustrated with a probability U4.

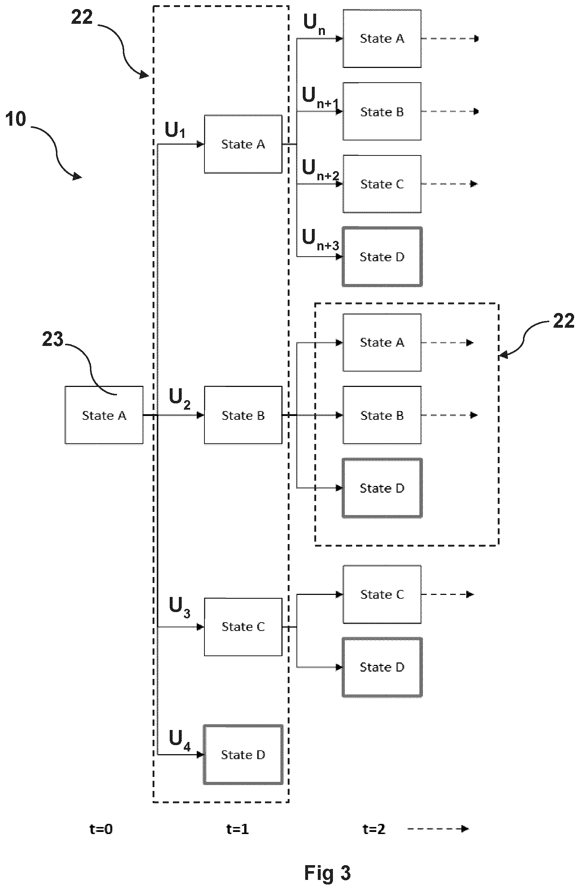

Fig. 3 illustrates the state model also illustrated in fig. 2. The state model illustrates a current discrete state 23 at t=0 and a subset of discrete states 22 possible to transition into from time t=0 to t=1 from the current state. At time t=2 another subset 22 is illustrated for 'state B' at t=1.

Emphasized state D is a final discrete state, from which the entity cannot transition from.

Once an entity has transitioned into a final state, the entity's route 28 in the state model ends, and that particular simulation can be terminated.

Each discrete transition state 2 determines a sub-flow of resources at time t, said sub-flow being determined based on an algorithm reflecting the set of rules. I.e. The sub-flow can be said to be regulated by the set of rules. The algorithm and the probability factors may be expressed as time dependent functions or algorithms. The time dependency may include dependency on the entity's age, absolute time and other data relevant for the entity and/or group of entities.

In one aspect, the probability factors may incorporate a dependency on prior discrete states of the entity.

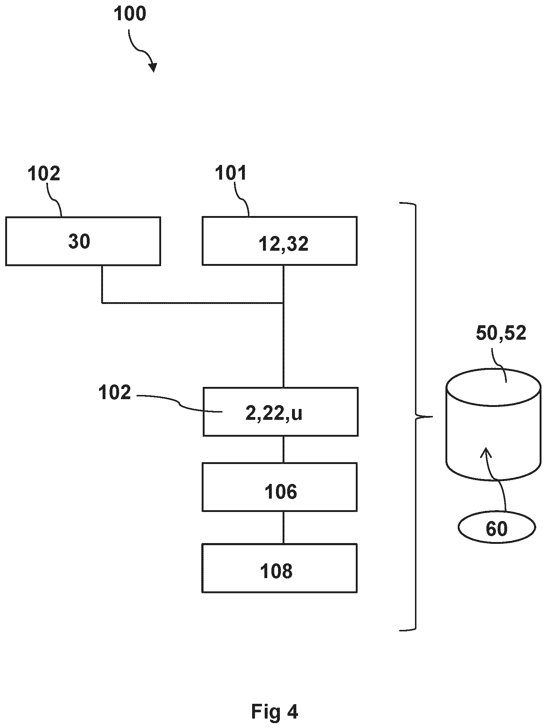

Fig. 4 illustrates one embodiment of the method comprising the acts of:
- providing 101 the set of rules 12;
- generating 102 for each entity a dataset 30 according to the set of rules;
- generating 102, based on the provided set of rules, a time-dependent state model 10, said state model comprising: a group of N discrete transition states 2; subsets 22 being open for the entity in a current transition state 2 to transition into at time, t, and a transition probability, u for the entity in the current transition state 2 to transition into one of the discrete states 2 comprised in the subset; and
- generating 102, based on the provided set of rules, algorithm(s) 70 for determining the sub-flow of resources for each discrete transition state at time t.

The set of rules may be replaced with a second set of rules 32. And the dataset 30 and the state model may be regenerated or generated according to the provided second set of rules 32.

At an initial time, each entity is arranged (106) in one of the discrete states according to the provided set of rules and the generated dataset 30 of the entity. From the initial position, a number of simulations of the entity's time dependent route (28) through the state model (10) is performed (108). For each route, at each time step and for each state model, a sub-flow of resources for each entity is determined. Based on these sub-flows a mean value for all the simulations can be calculated for estimating the expected flow of resources either on entity level, for specific discrete states, as a total resource flow or a combination hereof.

Figure 4 also illustrates one embodiment of a server 50 comprising a processor and computer-readable medium(s) 52 having stored instructions thereon causing the processor to perform one or more of the acts comprised in the method.

The acts performed by the processor may at least include the simulations and calculating the sub-flows. Preferably, additional acts of the method may also be performed using the one or more servers. The acts may be performed by parallel computing.

Alternatively, the one or more servers may comprise a processor and a non-transitory computer program product having embodied thereon a computer program for causing the processor to perform the acts.

The method is developed with the preferred aim of at least the simulations being performed by a processor and hence being computer implementable.

Fig. 4 therefore also illustrates an embodiment of a server 50 comprising a processor and computer-readable medium(s) 52 having stored instructions thereon causing the processor to perform one or more of the acts comprised in the method. The acts performed by the processor may at least include the simulations and calculating the sub-flows. Preferably, additional acts of the method may also be performed using the one or more servers. The acts may be performed by parallel computing.

Alternatively, the one or more servers 50 may comprise a processor and a non-transitory computer program product having embodied thereon a computer program for causing the processor to perform the acts.

In one embodiment of the illustrated method 100, the act of generating the data set and/or parts of the state model including the algorithms determining sub-flow of resources may be executed by artificial intelligence (Al agent) using one or more trained data driven models 60.

The trained data driven models may be trained using historical data or statistical data; or may be trained using an artificial generated estimated resource flow for a future time period according to the set of rules.

The data driven models 60 may be comprised in the server 50 or on an external server in communication with the server 50.

## Claims

1. A method (100) of estimating a resource flow associated to a group of entities, said resource flow being estimated according to a set of rules (12) and estimated for a period of time from T_0 to T_end, said method comprising acts of:
- providing (101) the set of rules (12);
- generating (102) for each entity a dataset (30) according to the set of rules, said data set comprising information of at least an age of the entity;
- generating (102), based on the provided set of rules, a time-dependent state model (10), said state model comprising:
-- a group of N discrete transition states (2),
-- for each transition state (2), a subset (22) of the discrete transition states (2) being open for the entity in a current transition state (2) to transition into at time, t, and
- a transition probability, u for the entity in the current transition state (2) to transition into one of the discrete states (2) comprised in the subset (22);
wherein said current transition state (23) is included in the subset (22);
wherein each discrete transition state (2) determines a sub-flow of resources at time t;
wherein each transition probability, u is defined by an algorithm and calculated based on an input of time t and data comprised in the entity's dataset (30), and
wherein the one or more transition probabilities, u for one entity in the current transition state (2) to transition into one of the discrete transition states (2) in the subset (22) at time, t sums to 1;
- generating (102), based on the provided set of rules, algorithm(s) (70) for determining the sub-flow of resources for each discrete transition state at time t;
- at an initial time (T_0), arranging (106) each entity in one of the discrete states (2) according to the provided set of rules and the generated dataset (30) of the entity, and
- for each entity, performing (108) a number of simulations of the entity's time dependent route (28) through the state model (10) according to the transition probabilities u, and for each simulation calculating at discrete times t_m a sub-flow of resources of the entity according to the discrete state, said times t_m being within the time period and separated by predefined time intervals D_t,
wherein the entities at times t_m will always be in one of the discrete state;
wherein the estimated resource flow is estimated for one or more entities and/or one or more discrete states over the period of time as a sum of the associated sub-flows divided by the number of performed simulations.

2. The method according to claim 1 comprising further acts of providing a second set of rules (32) and of regenerating, according to the second set of rules, the dataset (30) and/or the time-dependent state model (10) including the discrete transition states, the algorithms and/or the transition probabilities.

3. The method according to any one or more of the preceding claims, wherein at least the acts of performing the simulations and calculating the sub-flows are performed using one or more servers comprising a processor and computer-readable medium(s) having stored instructions thereon causing the processor to perform said acts.

4. The method according to claim 4 wherein at least the calculations are performed by parallel computing.

5. The method according to any of the preceding claims, wherein the act (102) of generating the data set (30) and/or parts of the state model (10) including the algorithms determining sub-flow of resources is executed by artificial intelligence (Al) using one or more trained data driven models (60) and/or large language models, wherein the trained data driven models is trained using:
- historical data or statistical data,
- an artificial generated estimated resource flow for a future time period according to the set of rules, and/or
- previously generated state models using the method according to any one or more of the preceding claims.

6. The method according to any one or more of the preceding claims, wherein the set of rules are defined by a pension scheme, the estimated resource flow is a financial flow and the entities are persons.

7. The method according to any one or more of the preceding claims, wherein the dataset (30), one or more of the discrete transition states (2), one or more of the algorithms determining sub-flow of resources and/or one or more of the transition probabilities is regenerated in accordance with one or more external events.

8. The method according to claim 7, wherein the external events include one or more of evolvement in inflation, interest, biometric assumptions, such as mortality or behavioural assumptions, such as retirement age.

9. The method according to any one or more of the preceding claims, wherein the number of simulations for each entity is chosen based on a predefined threshold for deviations of the estimated resource flow when repeating the simulation with different numerical seeds.

10. The method according to any one or more of the preceding claims, wherein the transition from one discrete transition state (2) to another discrete state in the subset (22) is initiated by a transformation of the entity, and the transition probability u is calculated based on a statistical intensity, z of that transformation taking place at time t for the entity of the age at time t, preferably the transition probability u is defined by *u =* 1 *- e^{-z}.*

11. The method according to any one or more of the preceding claims, wherein the set of rules includes a prioritized order of the transition, wherein the transition with the highest priority is weighted highest in the simulations.

12. A server (50) comprising a processor and computer-readable medium (52), whereon the computer-readable medium (52) having stored instructions causing the processor to perform the method according to any one or more of claims 1-12, preferably the server is a cloud-based server.

13. Use of the method according to any one or more of claims 1-12 for achieving a configurable computer implemented model for estimating a liability requirement according to a specific pension scheme and wherein the group of entities are a group of persons associated with the specific pension scheme, wherein said N discrete states (20) are associated with the rules of the specific pension scheme, and the unique dataset (30) comprises at least data about the person's age.

14. Use of the method according to claim 13 for estimating an upper or lower percentile of the liability requirement and/or the resource flow over an intermediate time period being within and being shorter than time period T_0 to T_End, wherein the percentile is calculated as the percentile with the highest or lowest resource for one or more entities and/or one or more discrete states over the intermediate time period.

15. Use of Monte Carlo simulation for estimating a resource flow associated to a group of entities according to a set of rules (12), said resource flow being estimated for a period of time from T_0 to T_end, said method comprising acts of:
- providing (101) the set of rules (12);
- generating (102) a dataset (30) according to the set of rules for each entity (6) comprising information of at least an age of the entity;
- generating (102), based on the provided set of rules, a time-dependent state model (10), said state model comprising:
-- a group of N discrete transition states (2),
-- for each transition state (2), a subset (22) of the discrete transition states (2) being open for the entity in a current transition state (2) to transition into at time, t, and
- a transition probability, u for the entity in the current transition state (2) to transition into one of the discrete states (2) comprised in the subset (22);
wherein said current transition state (23) is included in the subset (22);
wherein each discrete transition state (2) determines a sub-flow of resources at time t;
wherein each transition probability, u is defined by an algorithm and calculated based on an input of time t and data comprised in the entity's dataset (30), and
wherein the one or more transition probabilities, u for one entity in the current transition state (2) to transition into one of the discrete transition states (2) in the subset (22) at time, t sums to 1;
- generating (102), based on the provided set of rules, algorithm(s) (70) for determining the sub-flow of resources for each discrete transition state at time t, and
- performing the Monte Carlo simulation with a number of simulations for each entity from the initial time (T_0) to the end time (T_end) at discrete times t_m being within the time period and separated by predefined time intervals D_t,
wherein the estimated resource flow is estimated for one or more entities and/or one or more discrete states over the period of time as the sum of associated estimated sub-flows divided by the number of performed simulations, and
wherein the Monte Carlo simulation is a Markow chain or semi-Markow chain Monte Carlo simulation, and which use includes a server according to claim 12.
